# EUROPEAN PATENT APPLICATION

(11) **EP 2 450 690 A1**
(43) Date of publication of application: **09.05.2012**
(21) Application number: 10189922.7
(22) Date of filing: 04.11.2010
(51) Int. Cl.: G01N 21/03, B01L 3/00

(54) **Vessel for Accurate Optical Measurements**

(71) Applicant: Qiagen GmbH, 40724 Hilden (DE)
(72) Inventor: Bonk, Markus, 41352, Korschenbroich (DE)
(74) Representative: Gille Hrabal

(57) **Abstract**

The present invention relates generally to vessels for holding small amounts of liquid which are used in optical analysis apparatuses. More specifically the invention relates to vessels utilized in polymerase chain reaction (PCR) analysis which employ fluorescence detecting apparatuses.

The vessels commonly used are plastic vessels with a conical shape and a wide range of sealing systems. In prior art document US 2004/0258563 A1 a vessel is revealed which integrates a lens into the cap of the vessel. This is to allow for an accurate measurement from the top of the vessel, but the amount of liquid in the vessel can impede the accuracy and repeatability.

In view of the above, it would be advantageous if a vessel were available which permitted accurate and reliable optical analysis, particularly in conjunction with fluorescence-based detection apparatuses.

This problem is solved by a vessel comprising an open top (1), a sealed bottom (2), and a vessel body (3) featuring at least two flat surface (4/5) for the light transmission of a light source (1 0) or light detector (12). This flat surface improves the light refraction allowing for a more accurate optical analysis.

## Description

### Field of the Invention

The present invention relates generally to vessels for holding small amounts of liquid which are used in optical measuring apparatuses and to such an apparatus comprising at least one vessel. More specifically the invention relates to vessels utilized in polymerase chain reaction (PCR) analysis which employ fluorescence detecting apparatuses.

### Description of the Related Art

PCR analysis has become an important research tool for medical and biological research labs for a variety of applications. It is possible to analyze the state of nucleic acid amplification and thereby the success of the polymerase chain reaction (PCR) by monitoring the fluorescent properties in each thermal cycle of the PCR. A thermal cycle denotes the variation of the temperature in order to melt the target DNA at high temperatures and selectively amplify the DNA at low temperatures. Fluorescence-based approaches provide real-time measurements of amplification products during a PCR. These methods rely on light excitation and light detection. The increased fluorescent signal, at each amplification cycle, correlates to the amount of PCR product formed.

A wide variety of instrumentation has been developed to implement these fluorescence-based measuring approaches. The common setup consists of a thermal cycler with a rotating carousel inside which provides receptacles for the vessels. The temperature in the thermal cycler is accurately controlled by a temperature-regulated air flow. The carousel accommodating the vessels is rotating in order to maintain a steady temperature inside the thermal cycler. The light source for the fluorescent excitation is normally positioned under the rotating vessels. The fluorescence detector is aligned in the side wall of the thermal cycler. Additional lenses before the detection apparatus allow for the fluorescence to be focused on the detection unit. Still, the sensitivity and repeatability of the measurements achieved by this setup leave room for improvement as recent development efforts show.

The vessels commonly used are plastic vessels with a conical shape and a range of sealing systems. In document US 2004/0258563 A1 a vessel is revealed which integrates a lens into the cap of the vessel. This is to allow for an accurate measurement from the top of the vessel, but the amount of liquid in the vessel can impede the accuracy and repeatability.

Document WO 2008/1 291 23 A1 on the other hand discloses a plurality of connected vessels wherein the caps and the bodies of the vessels have different light transmitting properties. The objective is to prevent light reflections which occur inside and outside of the vessel due to reflecting objects like adjacent vessels. The overall reflections can be reduced, but it is unclear as to how effective the overall signal quality gain is.

### Summary of the Invention

In view of the above, it would be advantageous if a vessel were available which permitted accurate and reliable optical analysis, particularly in conjunction with fluorescence-based detection apparatuses.

A main object of the invention, therefore, is to provide an improved vessel and method for accurate and reliable optical measurements. Furthermore, the shape and material properties of the vessel should be engineered to allow optimal measurement results.

According to a first aspect of the invention, this problem is solved by a vessel comprising an open top, a sealed bottom, and a vessel body featuring at least two flat surfaces for the light transmission of a light source and detection unit wherein said at least two surfaces are not parallel to each other. This feature improves the light refraction allowing for a more accurate measurement. The sensitivity and reproducibility of the measurements can be increased as the flat surface reduces light scatter and diffusion. The overall noise level of the measurement can thus be decreased improving the signal-to-noise ratio, which allows for faster measurements as fewer thermal cycles are necessary.

The optical measuring apparatus for monitoring the polymerase chain reaction in a vessel comprises a vessel receptacle, a temperature-regulated chamber, a light source, a detection and analysis means and at least one vessel according to the invention. The light source, preferably an LED, illuminates the vessel to be analyzed. A detection unit, preferably a photometer or photomultiplier, collects the fluorescent signal from an optical pathway leading to the vessel to be analyzed.

According to a second aspect of the invention, the above aim is attained by a vessel that is tapered towards the sealed bottom. The general reason behind tapered or conical vessels is the usage of pipettes to fill and empty the vessels. In the fluorescence-based PCR analysis a taper furthermore simplifies the alignment of the vessels in the optical pathway of the measuring setup. The vessels are normally accommodated in a rotating carousel. The light source is preferably positioned under the rotating vessels and the detector unit is preferably placed next to the rotating vessels in the wall of the monitoring apparatus. The optical pathways for the illuminating light and the detection of the fluorescent signal usually cross at an orthogonal angle. The vessel itself is preferably fixed in the carousel with the bottom of the vessel hanging in the intersection of the optical pathways and pointing upwards in an angle. Said angle may be varied in a wide range. Preferably said angle is in the range of 10 - 80°, more preferably 30 - 70°, even more preferably 38 - 50°, most preferably 41 - 49°. Said angle may be adapted to facilitate that the liquid inside the vessel is not pushed up the wall due to the centrifugal force and the measurement is not impeded by an air gap between vessel and the liquid inside. A tapered shape of the vessel allows for an easy and precise alignment in the optical pathway and simplifies the arrangement of the optical instrumentation as well.

As mentioned above, the at least two flat surfaces are not parallel to each other, In an advantageous embodiment, said surfaces are aligned symmetrically with respect to the midplane of the vessel, wherein said midplane covers the symmetry axis of the vessel, It is furthermore advantageous that said surfaces draw an angle between said surfaces in the range of 5 - 175°, preferably 10 - 170°, more preferably 40 - 130°, even more preferably 60 - 120° and most preferably 75 - 105°.

In the present invention, as a rule, the term flat is meant to be broadly construed and to include slightly concave and convex surfaces as long as the performance and/or the light pathway is not obstructed. Usually a deviation of 10 percent of the inner diameter from a totally flat surface is acceptable.

According to a further aspect of the invention, the vessel is preferably made of plastics, e.g. polyolefins, polycarbonates, polyesters, polyamides, polyvinylchlorides and the like. More preferably, the vessel is made of cyclic olefin copolymers, polypropylene, PMP, graphene and the like. The skilled in the art will choose the respective material to balance optical clarity, price and thermal/light stability under the conditions of use. Preferably the material is heat-stable up to 140 °C and transparent for UV and visible light. These materials allow the economic manufacturing of thin-walled vessels which permit favorable thermal conductivity and allow a rapid thermal equilibration between air and the liquid inside the vessel which is critical for the thermal cycling process. Preferably, the wall thickness of the vessel is in the range of 0.001 to 1 mm, more preferably 0.1 to 0.5 mm.

In a preferred embodiment of the invention, the flat surface for the light transmission of the incident light is arranged at an angle of 75 - 105° to the light source. Likewise, the other flat surface for the light transmission of the detection unit is arranged at an angle of 75 - 105° to the detector. Most preferred are perpendicular alignments and alignments which deviate in the range of 7-10° from exact perpendicular alignments. The alignment is chosen to minimize the reflection angle thus reducing the amount of diffuse reflection and increasing the sensitivity of the overall measurement.

Due to the crucial impact that the exact alignment of the vessel has on the optical measurement, it is preferable according to the invention to provide at least one means for accurately aligning the vessel in the optical pathway such as a shaped section of the vessel, preferably at the upper part of the vessel, forming an obelisk, polygon, cube or the like. Alternatively, at least one protrusion and/or recess in radial direction preferably located at the open top is possible. The receptacle for the vessel offers the corresponding counterpart, for example a corresponding recess, protrusion and/or shaped form. This alleviates the meticulous labor of precisely aligning the vessels in the receptacle of the measurement setup. Thus the error-proneness of the measurement process can be significantly reduced making it viable to implement an automated workflow for the placement of the vessels.

In another embodiment of the invention, the vessel cross section features a polygon with a plurality of edges. The polygon shape can extend to parts of the vessel or the whole vessel. The shape not only integrates the function of the flat surface but also the function of aligning the vessel in the receptacle by its form-fit shape making an additional protrusion or recess redundant.

Preferably, several vessels are interconnected to form a strip of vessels, In order to fit the strip of vessels into the receptacle of a carousel-based thermal cycler the hinges of the strip are flexible in an embodiment of the invention. This allows the strip of vessels to be bent to fit into the receptacle carousel. The time for the placement of the vessels can be reduced at the same time ensuring a precise alignment of the vessels in the measurement setup.

In the most preferred embodiment of the vessel, several vessels are connected as a ring structure. This ring structure can then be inserted into the receptacle for the rotating carousel, Alternatively, the ring structure can also comprise a rotary body which can be fixed to a revolvable drive of the thermal cycler. This embodiment allows for an easy to handle vessel ring which facilitates a fast automated workflow.

In further preference, the vessel features an insertion element which seals the open top. Preferably, the insertion element is elastic or flexible, The insertion element which has for example the shape of a ball tightly seals the vessel in order to prevent a contamination of the liquid to be analyzed during handling and measurement. The simple sealing mechanism allows for an automated implementation. As an alternative the top of the vessel can be made elastic or flexible to accommodate a sealing element.

In order to economically manufacture the aforementioned vessel embodiments, it is preferable to use the injection molding technique. Especially the embodiment with several interconnected vessels forming one component can thus be made in one manufacturing step and allow the use of the vessels as easily disposable products.

According to another aspect of the invention, the vessel features one or more specific surface textures particularly for the light transmitting flat surfaces. The texture can be obtained by surface treatments, like plasma treatment. The texture can be used to achieve a specific light transmission performance. The surface treatment can be restricted to parts of the vessel. Furthermore a combination of different surface treatments for a single vessel is also feasible, In doing so, spurious light reflections and refractions can be further minimized and optimized optical pathways for an accurate measurement can be constructed. Alternatively, the same effect can be obtained by the process of surface coating. Both aspects of the invention can also be used in parallel in order to increase the desired effect.

In another preferred embodiment, said surface texture is shaped during manufacture of the vessel, such as deep-drawing of a textured film to generate the vessel, use of in-mold structures for injection-molding and the like. This reduces the manufacturing steps as the shaping and the texturing steps are combined.

According to the method of the invention, the polymerase chain reaction in the vessel is measured by providing the above described measuring apparatus and further by accurately aligning the vessel surface(s) for the light transmission with regards to the light source and detection unit. As discussed above, the alignment of the vessel in the measuring setup is a crucial factor. Only an accurate alignment of the vessels regardless of their embodiment can ensure the same accurate, reliable measurements for all vessels. Thus the step of aligning the vessel, the interconnected strip of vessels or the ring of vessels is indispensable for the invention. For the purpose of process optimization a further method specifies an automated placement and alignment, In this way the preparation time for installing and aligning the vessels can be reduced while providing accurate and fast measurements at the same time.

In order that the invention may be more fully understood, reference will now be made to the accompanying drawings.

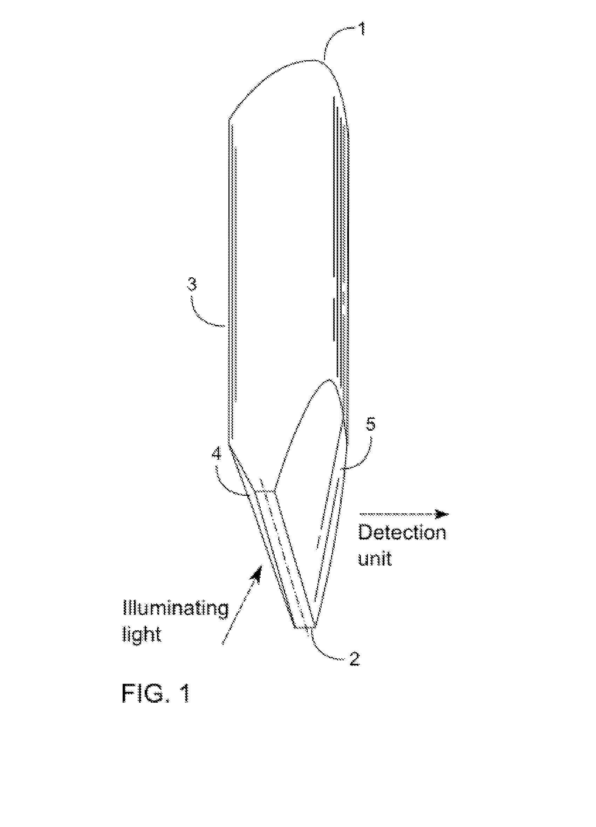

FIG. 1 is a perspective view of a vessel showing the improvements of the present invention. The vessel comprises an open top 1 , a tapered sealed bottom 2 and a vessel body 3 featuring two flat surfaces 4/5. One flat surface 4 is used for the light transmission of the illuminating light while the other flat surface 5 allows the detection unit to collect the signal from the vessel. The vessel diameter is in the range of 1-10 mm with a vessel length of about 15-20 mm, thus comprising a volume of approximately 15-25 *µ*l. The vessel wall itself is usually 0.4 mm thick and made of highly transparent plastics. Optimal surface areas for the light transmission encompass about 1 -10 mm².

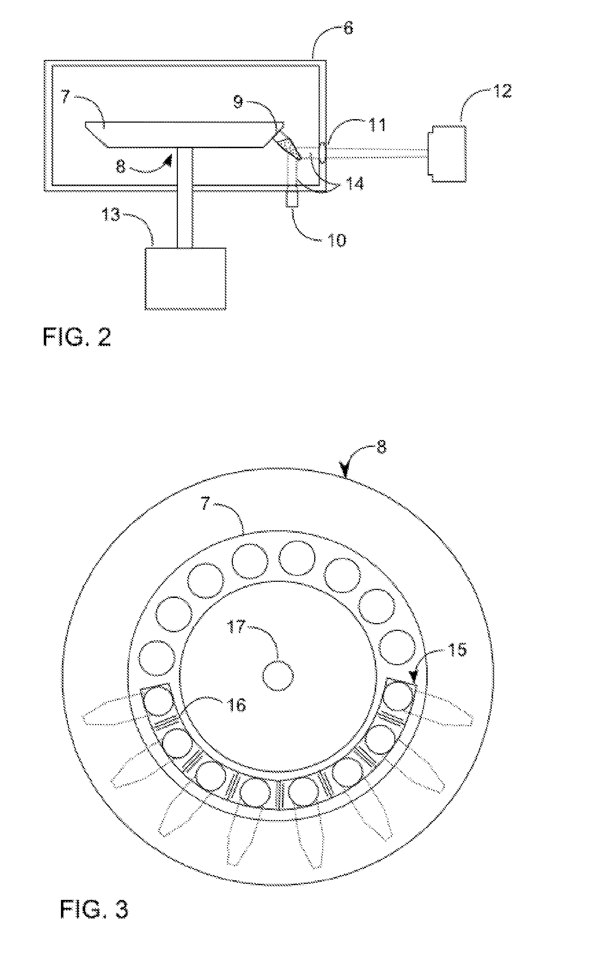

FIG. 2 visualizes the vessel 9 in the overall setup of the optical measuring apparatus. The temperature-regulated chamber 6 accommodates a plurality of vessels 9 inserted into a receptacle 7 which is rotated by a motor-driven 13 carousel 8. A light source 1 0 under the rotating carousel 8 illuminates the vessel 9 and a lens 11 collects the optical signal in the vessel and directs it through an optical pathway 14 to the detection unit 12.
FIG. 3 illustrates a possible embodiment for a strip of interconnected vessels 15 inserted into a receptacle 7 of a carousel 8. The strip of vessels 15 is preferably formed integrally by injection molding. The hinges 16 between the vessels enable the strip of vessels 15 to be fitted into the receptacle 7 but the strip can also be circular in the first place. The flat surfaces for the light transmission on all interconnected vessels have the same optical alignment. The strip of vessels 15 also guarantees that the flat surfaces 4/5 of the vessels are accurately aligned with regards to the illuminating light 10 or the signal detection unit 12. In another embodiment the receptacle 7 can be replaced by a strip of vessels 15 that is extended to an interconnected ring. The ring of vessels can have a rotary body which is than fixed by a mounting hole 17 to the rotating carousel 8.

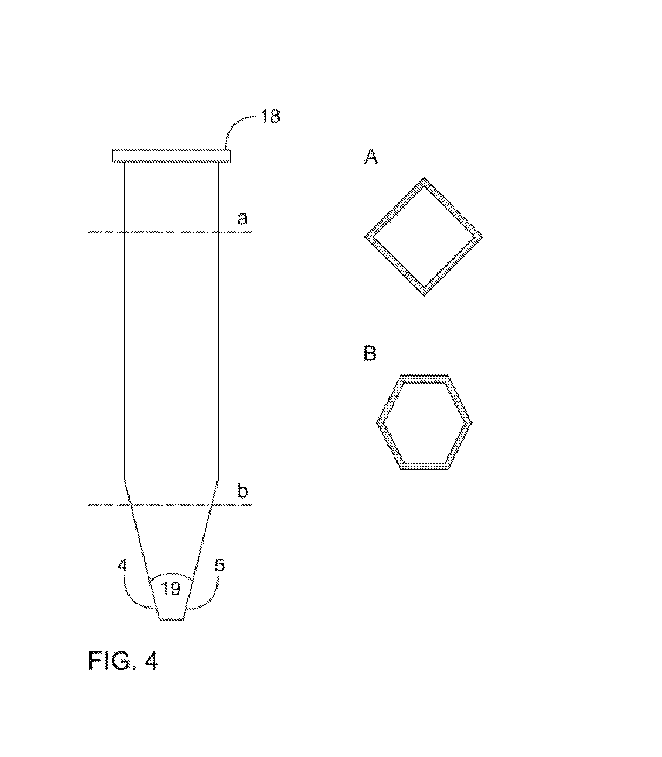

FIG. 4 exemplifies some alternative vessel cross sections for the body in sectional view (a) and for the tapered bottom in sectional view (b). The cross section can be different for the upper and lower part of the vessel. Cross section type A shows a polygon with 4 edges, type B a polygon with 6 edges, In this vein a polygon with any number of edges is conceivable. However, the number of edges restricts the size of the flat surfaces 4/5 for the light transmission. The protrusion 18 at the open top 1 enables the vessel to be fixed and aligned in the receptacle 7.

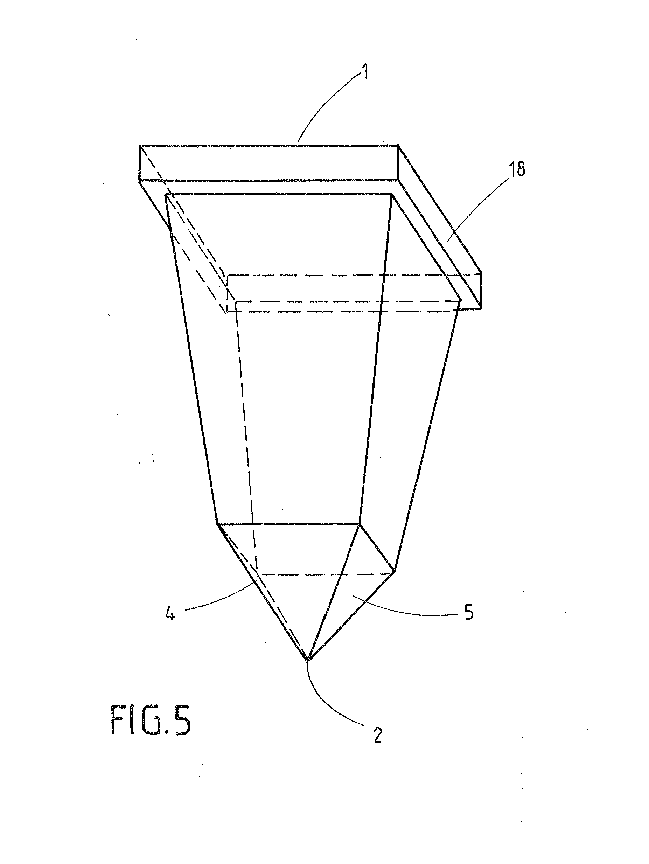

FIG. 5 illustrates an embodiment with a square cross section for the upper as well as the lower part of the vessel, wherein the sealed bottom 2 forms an apex. The cross section is a polygon with 4 edges and both parts of the vessel are tapered towards the sealed bottom 2. The flat surfaces 4/5 located at the lower part of the vessel draw a bigger angle than the flat surfaces at the upper part of the vessel, Any flat surface at the sealed bottom 2 can be used for the light transmission of the light source or detection unit. Thus the flat surfaces 4/5 can be facing each other or situated next to each other depending on the layout of the optical measuring apparatus.

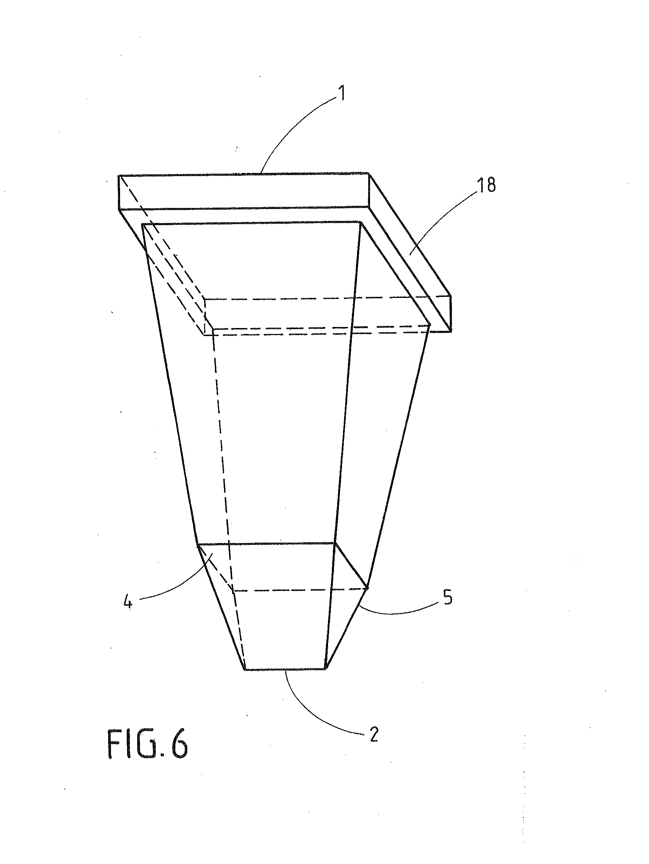

FIG. 6 is based on the embodiment in FIG. 5 with the sealed bottom 2 forming an edge instead of an apex. This leads to increased areas for the flat surfaces 4/5.

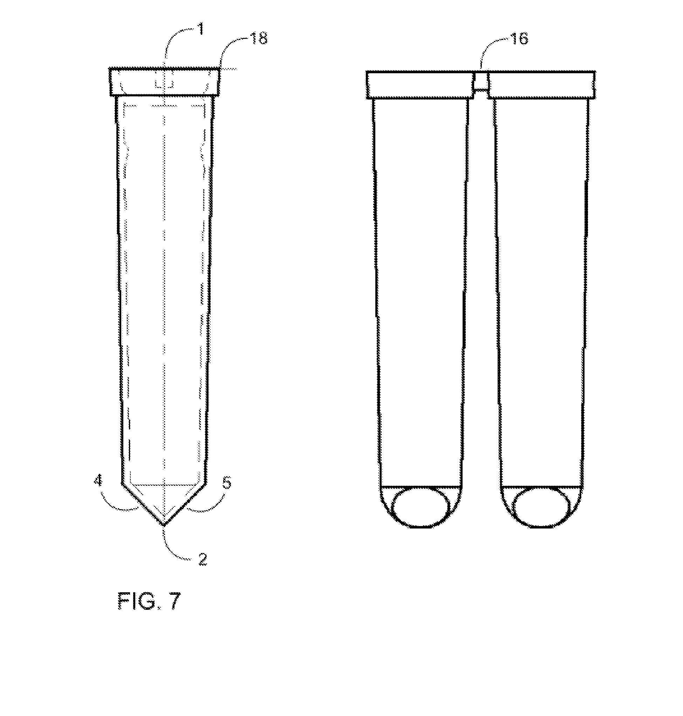

FIG. 7 visualizes a strip of vessels with a round cross section for the upper part of the vessel. The flat surfaces 4/5 are provided at the sealed bottom 2 as round areas. The protrusion 18 at the open top 1 of the vessel is used for interconnecting two vessels via a hinge 16. The hinge 16 can be rigid or flexible by structure and/or material. A flexible hinge 16 allows the strip of vessels to be used in an optical measuring apparatus with a round receptacle 7. Irrespective of the number of interconnected vessels, a strip of vessels guarantees the exact alignment of the vessels in the optical pathway 14. An additional protrusion or recess for aligning each vessel in the receptacle is dispensable, as the hinges 16 between the vessels ensure an accurate alignment of the interconnected vessels.

- 1:: Open top
- 2:: Sealed bottom
- 3:: Vessel body
- 4:: Flat surface (for incident light)
- 5:: Flat surface (for signal detection)
- 6:: Chamber
- 7:: Receptacle
- 8:: Carousel
- 9:: Vessel
- 10:: Light source
- 11:: Lens
- 12:: Detection unit
- 13:: Motor
- 14:: Optical pathway
- 15:: Strip of vessels
- 16:: Hinge
- 17:: Mounting hole
- 18:: Protrusion
- 19:: Angle between the flat surfaces

## Claims

1. A vessel for holding small quantities of liquid and for use in an optical measuring apparatus, comprising an open top (1) and a sealed bottom (2), and the vessel body (3) features at least two flat surfaces (4/5) for the light transmission of a light source (10) and detection unit (12) **characterized in that** said flat surfaces are not parallel to each other.

2. A vessel according to claim 1 , wherein said flat surfaces for the light transmission (4/5) draw an angle (19) in the range of 5 - 175°, preferably 10 - 170°, more preferably 40 - 130°, even more preferably 60 - 120°, most preferably 75 - 105°.

3. A vessel according to claim 1 or 2, wherein the flat surfaces (4/5) used for the light transmission of the light source (10) and detection unit (12) are arranged at an angle of 75 - 105°, preferably at an angle of 90°, to the corresponding light source or detection unit.

4. A vessel according to any of claims 1 to 3, wherein the vessel features an alignment means, preferably in the form of a vessel shape, protrusion (1 8) and/or recess in radial direction near the open top (1).

5. A vessel according to any of claims 1 to 4, wherein the vessel cross section features a polygon with a plurality of edges, particularly for the alignment of the vessel and/or the light transmission of a light source and detection unit.

6. A vessel according to any of claims 1 to 5, wherein a plurality of vessels is interconnected to form one component.

7. A vessel according to the preceding claim, wherein the flat surfaces (4/5) for the light transmission on several interconnected vessels have the same optical alignment.

8. A vessel according to any of claims 6 to 7, wherein the interconnected vessels have flexible hinges (16).

9. A vessel according to any of claims 1 to 7, wherein a plurality of vessels are interconnected to form a ring structure.

10. A vessel according to the preceding claim, wherein the ring structure features a rotary body with a mounting means (1 7) to fix the ring structure to a rotary drive.

11. A vessel according to any of claims 1 to 9, wherein the vessel features a flexible insertion element which seals the open top of the vessel.

12. A vessel according to any of claims 1 to 1 0, wherein the vessel or a plurality of interconnected vessels is made by injection molding.

13. An optical measuring apparatus for monitoring the polymerase chain reaction in a vessel, comprising a vessel receptacle (7), a temperature-regulated chamber (6), a light source (10), a detection (1 2) and analysis means and at least one vessel according to any of the preceding claims.

14. A method of optically measuring the polymerase chain reaction in a vessel according to one of the preceding claims, which method comprises:
(a) providing an optical measuring apparatus according to the preceding claim;
(b) inserting the vessel or a plurality of vessels in the receptacle (7) of the measuring apparatus, so that at least one flat surface (4/5) for the light transmission of the light source (10) or the detection unit (1 2) is accurately aligned to allow the optimal light transmission of the corresponding light source or detection unit.

15. A method according to the preceding claim, wherein the alignment of the vessel or a plurality of vessels is implemented in an automated workflow.
